**Europäisches Patentamt**

**European Patent Office**

**Office européen des brevets**

(11) Publication number: **0 449 600 A2**

# EUROPEAN PATENT APPLICATION

(21) Application number: 91302661.3

(22) Date of filing: 27.03.91

(51) Int. Cl.⁵: **F16L 9/00**

(30) Priority: 30.03.90 DE 4010178

(43) Date of publication of application:
02.10.91 Bulletin 91/40

(84) Designated Contracting States:
**AT BE DE ES FR GB IT NL SE**

(71) Applicant: BUNDY GmbH
Dischingerstrasse 11
W-6900 Heidelberg (DE)

(72) Inventor: Bartkowski, Heinz
Hermann-Rinne-Strasse 4a
W-4100 Duisburg 25 (DE)
Inventor: Hentzschel, Erhard
Haselnussweg 3
W-6940 Weinheim (DE)
Inventor: Dietzel, Hans-Ulrich
Parkring 63
W-6837 St. Leon-Rot (DE)

(74) Representative: Lawrence, Brian Richard
59 Shenfield Place
Shenfield Brentwood Essex CM15 9AH (GB)

(54) **Multilayer tubing made from metal and production process therefor.**

(57) On a multilayer tubing made of metal, particularly for hydraulic brake systems of motor vehicles, which is produced from a flat metal strip by axial winding, the metal strip consists of an alloyed austenitic steel. A process for producing the multilayer tubing is also described.

Fig.2

EP 0 449 600 A2

This invention relates to multilayer tubing made from metal, especially suitable for hydraulic brake systems of motor vehicles, produced by axially winding a flat metal tape and a method of production therefor.

Such tubing, when made from carbon steel has proven very useful as fluid pipes, i.e. for brake fluids or fuels or for refrigerator/freezers. It is mechanically very stress resistant, and by applying an anti-rust coating, a certain amount of protection from chemical attacks, such as salt water, can be achieved.

Instead of corrosion-protected multilayer steel tubing, seamless tubing made from copper alloys, such as CuNiFe, is also used. However, this has the disadvantage that problems can occur due to unevenness of the single layer wall. In addition, cracks may appear during manufacture due to internal stress or surface-breaks due to extrusion in a cold state which will lead to fractures at a later stage. Such tubing is also subject to tension cracks due to the effect of chemical substances present on road surfaces which get onto the tubes by water spray or air flow. The ammonia contained in faeces also attacks seamless brake pipes made from unprotected copper alloys.

It is an object of the present invention to provide a multilayer tube made from metal, which is extremely resistant to chemical attack as well as to mechanical stresses, and also to a process for producing multilayer tubing made of metal.

A characteristic feature of the invented tubing is that the metal tape consists of a compound, austenitic steel with, preferably, a molybdenum content of at least 2%. However, the use of an austenitic type of steel without molybdenum content can also be used within the framework of this invention.

It is particularly envisaged that the steel should contain the, in fact, well-known alloy components of: 0 to 0.1% carbon, 10.5 to 14% nickel, 16.5 to 18.5% chromium, 2.0 to 2.5% molybdenum, a maximum of 1% silicon and a max. of 2% manganese. A further component could be titanium at more than 5 times the carbon content or at least 8 times the carbon content of niobium.

This composition produces both a resistance to many chemical substances and at the same time good mechanical strength properties. Depending on the detailed alloy structure it would be possible to replace part of the niobium content by double the quantity of tantalum.

The bond between the individual layers which is necessary after winding, i.e. shaping should in the invented multilayer tubing preferably be made by means of copper solder. In this process copper solder is metallurgically combined with steel.

Due to the chemical resistance of the material used in this further development no extra protective coating is necessary. In another further development, a dispersion layer applied to the steel has been envisaged. This dispersion layer should preferably consist of nickel phosphorous. It has the advantage that steel without molybdenum content can be used.

This invention furthermore includes an advantageous process for the manufacture of multilayer tubing made from metal, particularly for hydraulic brake systems for motor vehicles by axially winding a flat metal tape characterised in that a solder, used to bind the individual layers, is distributed over the areas to be joined after the winding operation.

The invented process as well as most further developments of this process are specially designed for the production of multilayer tubing made from alloyed austenitic steel. However, they can also be applied to advantage to other types of steel, for instance, to ordinary carbon steel. The latter particularly provides economic advantages. The invented process is suitable for continuous as well as for intermittent production.

One advantageous further development of the invented process is that the solder is deposited at the outer or inner edge of the gap formed during moulding and then distributed over the whole gap by capillary effect after heating the multilayer tubing. It is possible to deposit the solder either at the outer edge after moulding or at one of the edges of the yet unmoulded metal tape. In both cases the solder can be deposited by spraying or by providing the solder in strip, e.g. wire or tape, form. Appropriate methods are well known.

In order to achieve a reduction in the passive surface of the metal tape for the subsequent soldering process, another further development prescribes how to subject the already moulded multilayer tubing to a first temperature increase under reducing gas, preferably hydrogen, at a purity to 5.0. Then a further heating stage, a second temperature increase, follows during which the solder melts. This second temperature should be held for a given period.

An advantageous form of this further development prescribes that the first temperature be $\geq$ 1000°C, but remain below the melting temperature of solder, the second temperature, however, be slightly above the melting temperature of solder and that the given time be $\leq$ 20 s.

This way, a flawless reduction of the surface of the metal tape is obtained on the one hand whilst any grain-boundary diffusion of the solder during the immediately following soldering process is prevented which, as is well-known, can lead to a so-called "solder break".

The reduction process as well as the transition to melting of the solder and a distribution of the solder throughout the gap is improved by the fact that a temperature increase of about 5°C/s between the first and the second temperature takes place.

An adaptation of the invented process for the use of copper consists of an increase in the temperature of the already moulded multilayer tubing to 10000°C in a first phase, a supply of reducing gas, preferably hydrogen at a purity of 5.0 started during the first phase, a temperature increase to approximately 1090°C obtained during the second phase, the temperature achieved being maintained during a third phase for a duration of ≦ 20 s, and cooling of the multilayer tubing taking place during a fourth phase.

When using uncoated metal tape it will be advantageous to use an internal tool (float) for moulding which is made from a material not subject to tendencies of adhesive wear on the metal tape material. The float should be stable up to a temperature of about 650°C. This way, the temperature can be increased immediately after moulding which is particularly advantageous during continuous production.

Some exemplary embodiments of the invention will now be described reference being made to the accompanying drawings, in which:

Fig. 1 is a cross-section of a multilayer tube in accordance with the present invention;

Fig. 2 depicts various cross-sections of the multilayer tube of Fig. 1 during various phases of the production process; and

Fig. 3 depicts a timing diagram showing the temperatures to which the multilayer tube is subjected after moulding.

The various components have been given appropriate references in the diagrams.

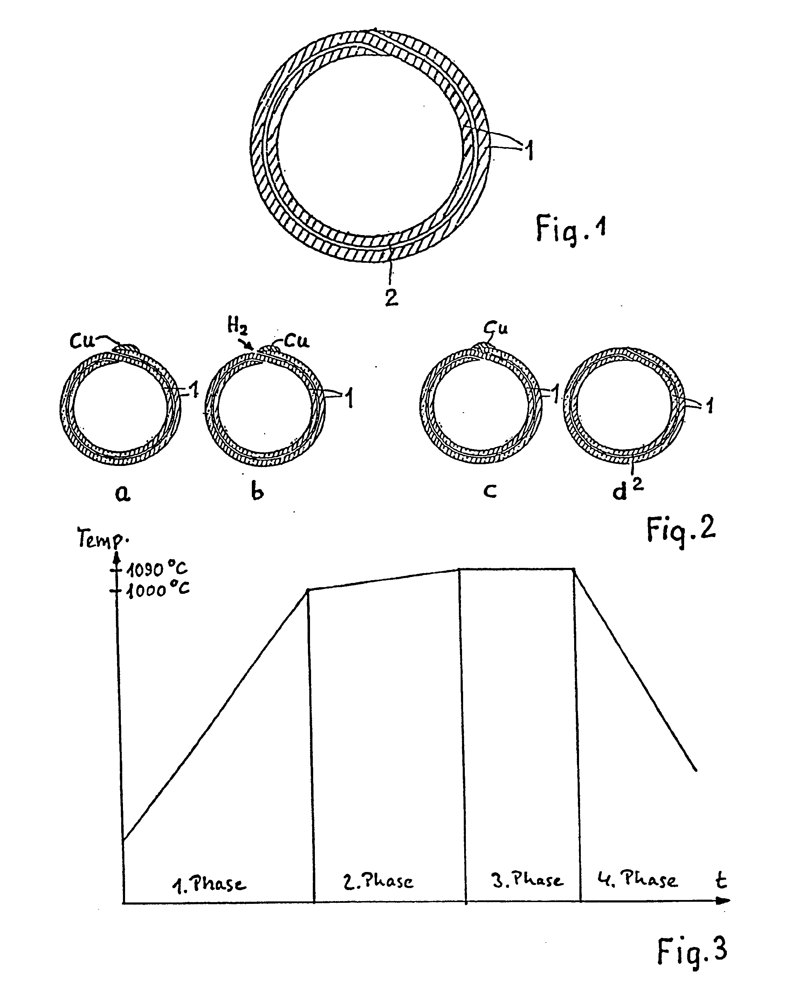

As depicted in Fig. 1, the invented multilayer tube consists of an axially wound steel tape 1 which, according to the so-called Bundy-process, is rolled up to the extent that it consists of two layers at every point of the circumference. Between the layers a layer of solder 2 is situated which should preferably consist of copper or a suitable copper alloy and which should ensure a firm join between the layers. Metal tape 1 consists of steel of the following composition: 0 - 0.1% carbon, 10.5 - 14.0% nickel, 16.5 - 18.5% chromium, 2.0 - 2.5% molybdenum, more than five times the carbon content of titanium, a maximum of 1% silicon, a maximum of 2% manganese and at least 8 times the carbon content of niobium.

This composition ensures high mechanical stability and a protection from all chemical influences attacking the underside and engine compartment of a motor vehicle.

In the description of a practical example for the invented process the tape consists of austenitic alloyed steel. Several different methods for the initial moulding are available so that a description in conjunction with the invented process will not be necessary. It should only be pointed out that the internal tool, the so-called float, is adapted to the uncoated metal tape such that it does not cause adhesive wear of the tape material.

After moulding, a soldering agent is applied to the outer edge region of the gap in the multilayer tubing by spraying as shown in Fig. 2a or in strip e.g. wire or tape form. Pure copper could be chosen as a soldering agent. However, suitable copper alloys could also be used, as well as other suitable solders.

The temperature of the processes following moulding is controlled in such a way that the cold hardening process of the tape wound to a multilayer tube takes place sufficiently slowly and without major geometrical changes of the roll taking place in order to obtain the necessary very narrow soldering gap. However, in the interest of achieving a required production speed and a limitation in the dimensions of the heating plant, it has been found that instead of using any slow temperature increase of the moulded multilayer tube, it has been found that the heat timing diagram of Fig. 3 is particularly advantageous. As shown in Fig. 3, an initially relatively quick temperature increase is envisaged. During this first phase hydrogen is added from external sources (Fig. 2b). An appropriately high pressure ensures that the hydrogen penetrates the gap to the interior of the multilayer tube. As soon as a temperature of about 1000°C has been exceeded, phase two commences, in which the temperature is increased by about 5°C/s. During this phase the reduction process takes place which is completed when the melting temperature of the copper solder has been reached.

Thus the third phase is reached at the beginning of which the liquid copper solder is drawn into the gap by a capillary effect (Fig. 2c). The duration of the third phase is critical for a good metallurgical bond between copper solder and steel tape. However, grainboundary diffusion must be avoided. For this reason the third phase must not exceed a duration of ≦ 20 s. A fourth phase then serves as the final cooling process.

## Claims

1. Multilayer tubing made from metal, especially for hydraulic brake systems of motor vehicles produced by axially winding a flat metal strip, characterised in that the metal strip consists of an alloyed austenitic steel.

2. Multilayer tubing according to claim 1, characterised in that the steel has a molybdenum content of at least 2%.

3. Multilayer tubing according to claim 2, characterised in that the steel contains the following alloy components in a manner known in itself:
0 to 0.1% carbon,
10.5 to 14% nickel,
16.5 to 18.5% chromium,
2.0 to 2.50% molybdenum,
a maximum of 1% silicon and
a maximum of 2% manganese.

4. Multilayer tubing according to claim 3, characterised by a titanium component which is more than 5 times the carbon content.

5. Multilayer tubing according to claim 3, characterised by a niobium content of at least 8 times the carbon content.

6. Multilayer tubing according to claim 5, characterised in that a partial quantity of the niobium is replaced by double the quantity of tantalum.

7. Multilayer tubing according to one of the preceding claims, characterised in that the individual layers are metallurgically bonded by copper solder.

8. Multilayer tubing according to claim 1, characterised by a dispersion layer applied to the steel.

9. Multilayer tubing according to claim 8, characterised in that the dispersion layer consists of nickel phosphorus.

10. Process for producing multilayer tubing made of metal especially for hydraulic brake systems of motor vehicles by axially winding a flat metal strip, characterised in that a solder, used to bind the individual layers, is distributed over the surfaces to be joined after the winding operation.

11. Process according to claim 10, characterised in that the metal strip consists of normal carbon steel.

12. Process according to claim 10, characterised in that the metal strip consists of alloyed austenitic steel.

13. Process according to claim 10, characterised in that the solder is deposited at the outer or inner edge of the gap formed by moulding and, after the heating of the multilayer tubing, is distributed over the surfaces to be joined by capillary action.

14. Process according to claim 13, characterised in that the solder is deposited at the outer edge of the gap after moulding.

15. Process according to claim 13, characterised in that the solder is deposited in the area of one of the edges of the yet unmoulded metal strip.

16. Process according to either of claims 14 or 15, characterised in that the solder is sprayed on.

17. Process according to claim 14 or 15, characterised in that the solder is applied in strip form.

18. Process according to claim 10, characterised in that the already moulded multilayer tubing is heated to an initial temperature under reducing gas, preferably hydrogen at a purity of 5.0, in that this is followed by further heating to a second temperature, during which the solder melts and in that the second temperature is held for a predetermined period.

19. Process according to claim 18, characterised in that the first temperature is $\geq$ 1000°C, but is below the melting temperature of the solder, in that the second temperature is slightly above the melting temperature of the solder and in that the predetermined time is $\leq$ 20 s.

20. Process according to claim 19, characterised in that a temperature increase of approximately 5°C/s takes place between the first and second temperature.

21. Process according to claim 10, characterised in that the temperature of the already moulded multilayer tubing is increased in a first phase to approximately 1000°C, in that, in the first phase, the supply of reducing gas, preferably hydrogen, is commenced with a purity of 5.0, in that, in a second phase, the temperature is increased to approximately 1090°C, in that, in a third phase, the temperature reached is held for $\leq$ 20 s and in that, in a fourth phase, a cooling of the multilayer tubing takes place.

22. Process according to claim 10, characterised in that an internal tool (float) is used for moulding which is made from a material which is not subject to adhesive wear on the metal strip material.

23. Process according to claim 22, characterised in that the float is stable up to a temperature of approximately 650°C.

Fig.1

Fig.2

Fig.3